# EUROPÄISCHE PATENTANMELDUNG

(11) **EP 1 306 118 A1**
(43) Veröffentlichungstag der Anmeldung: **02.05.2003**
(21) Anmeldenummer: 02022616.3
(22) Anmeldetag: 09.10.2002
(51) Int. Cl.: B01D 29/66

(54) **Verfahren zur Reinigung eines Filters für Flüssigkeiten und System zur Durchführung des Verfahrens**

(30) Priorität: 24.10.2001 DE 10151864
(71) Anmelder: Boll & Kirch Filterbau GmbH, 50170 Kerpen (DE)
(72) Erfinder: Sindorf, Heinrich Leonhard, 41569 Rommerskirchen (DE); Rott, Willi, 53332 Bornheim (DE)
(74) Vertreter: Althaus, Arndt, Dipl.-Ing.

(57) **Zusammenfassung**

Die Erfindung betrifft ein Verfahren zum Betrieb eines Filters (10), und ein System (100) zur Durchführung des Verfahrens mit einem Filter (10) für Flüssigkeiten, inbesondere flüssige Brenn-, Schmier- und Kühlschmierstoffe sowie Waschlaugen und -lösungen, dessen von der Flüssigkeit durchströmbares Filtermittel den Filter (10) in eine den Filtereinlaß (2) umfassende Schmutzseite (4) und den Filtratauslaß (3) umfassende Filtratseite (5) trennt, und der in der Rückspülphase in entgegengesetzter Richtung zur Filtrierrichtung durch ein Rückspülverfahren mit Rückspülmedium rückgespült wird. Um durch eine optimierte Reinigung des Filtermittels eine lange, wartungsfreie Lebensdauer des Filters (10) erzielen zu können, ist zusätzlich zu dem ersten, bei jedem Filter (10) vorgesehenen, im Gegenstrom reinigenden Rückspülverfahren wenigstens ein zweites, nach einem anderen Prinzip arbeitendes Reinigungsverfahren vorgesehen. Durch Hintereinenderschalten oder durch gleichzeitiges Anwenden des Rückspülverfahrens und des wenigstens einen Reinigungsverfahrens wird die Reinigung des Filtermittels gegenüber dem bekannten Verfahren und System verbessert. Das Reinigungsverfahren kann inbesondere eine Druckluft- oder Druckgasrückspülung, eine Pulsventilreinigung, eine Reinigung mit Vakuum, ein Umwälzen mit Kolbenreinigung oder eine Ultraschalleinwirkung umfassen.

## Beschreibung

Die Erfindung betrifft ein Verfahren zum Betrieb eines Filters für Flüssigkeiten, insbesondere flüssige Brenn-, Schmier- und Kühlschmierstoffe sowie Waschlaugen und -lösungen, mit einer Filtrierphase, in der die Flüssigkeit durch einen Filtereinlaß in die Schmutzseite des Filters eintritt und nach Durchströmen des Filtermittels und Übertritt in die Filtratseite aus einem Filtratauslaß austritt, und mit einer Rückspülphase, in der das Filtermittel in entgegengesetzter Richtung von einem Rückspülmedium durchströmt und gelöste Verunreinigungen aus der Schmutzseite des Filters ausgebracht werden. Die Erfindung betrifft desweiteren ein System zur Durchführung des Verfahrens mit einem Filter für Flüssigkeiten, insbesondere flüssige Brenn-, Schmier- und Kühlschmierstoffe sowie Waschlaugen und -lösungen, dessen von der Flüssigkeit durchströmbares Filtermittel den Filter in eine den Filtereinlaß umfassende Schmutzseite und den Filtratauslaß umfassende Filtratseite trennt, und der in der Rückspülphase in entgegengesetzter Richtung zur Filtrierrichtung durch ein Rückspülverfahren mit Rückspülmedium rückspülbar ist.

Gattungsgemäße Verfahren zum Rückspülen von Rückspülfiltern und entsprechende Systeme sind in unterschiedlichen Varianten und Ausführungsformen im Stand der Technik bekannt. Die Rückspülung bzw. Reinigung der Filterelemente, die von einem zylindrischen Filtereinsatz oder einer Mehrzahl von z.B. konzentrisch angeordneten Filterkerzen gebildet werden, erfolgt meist im Gegenstrom zur Filtrierrichtung. Einige Reinigungsverfahren und Systeme reinigen hierbei ausschließlich mit Filtrat. Bei diesen Filtern ist ein drehbares Spülglied vorgesehen, mit dem einzelne Filterkerzen vom Filtrierbetrieb abgeschottet und dem Rückspülbetrieb unterzogen werden (z.B. DE 4340275). Andere Rückspülverfahren und -systeme sehen eine Rückspülzone vor, in der einzelne Filterelemente in einer bestimmten Zone von den anderen Filterelementen abgetrennt und in dieser Zone mit druckgasbeaufschlagtem Medium rückgespült werden (DE 197 34 588 Al). Wiederum andere Rückspülfilter und -verfahren nutzen zur Rückspülung den Differenzdruck zwischen der Filtratseite und dem Umgebungsdruck aus. Jedes der vorgenannten Verfahren und Systeme zeigt für diejenigen Flüssigkeiten oder Verunreinigungsgrade von Flüssigkeiten, für die sie ausgelegt sind, ein günstiges Betriebsverhalten, das eine automatische Steuerung zwischen Filtrierphase und Rückspülphase ermöglicht. Gleichwohl unterliegen sämtliche Verfahren und Systeme einer bestimmten Lebensdauer und mithin einem Wartungszyklus, den es zu verbessern gilt.

Aufgabe der Erfindung ist es, ein Verfahren zum Betrieb eines Filters und ein System zur Durchführung des Verfahrens vorzuschlagen, mit dem durch optimierte Reinigung des Filtermittels eine lange, wartungsfreie Lebensdauer des Filters erzielt werden kann.

Diese Aufgabe wird in ihrem verfahrensmäßigen Aspekt durch die in Anspruch 1 und in ihrem vorrichtungsmäßigen Aspekt durch die in Anspruch 16 angegebene Erfindung gelöst.

Hinsichtlich des Verfahrens ist erfindungsgemäß vorgesehen, daß vor, während und/oder nach der Rückspülphase das Filtermittel mit wenigstens einem von dem ersten Rückspülverfahren insbesondere im Reinigungsmedium oder in der Strömungscharakteristik des Rückspülmediums abweichenden Reinigungsverfahren gereinigt wird. Die Erfindung sieht mithin vor, daß zusätzlich zu dem ersten, bei jedem Filter vorgesehenen, im Gegenstrom reinigenden Rückspülverfahren wenigstens ein zweites, nach einem anderen Prinzip arbeitendes Reinigungsverfahren vorgesehen ist, so daß durch Hintereinanderschalten oder durch gleichzeitiges Anwenden des Rückspülverfahrens und des wenigstens einen Reinigungsverfahrens die Reinigung des Filtermittels gegenüber dem bekannten Verfahren verbessert wird.

Besonders bevorzugt wird hierbei, wenn die Dauer, Intensität und/oder Strömungscharakteristika des Reinigungs- oder Rückspülmediums in der Reinigungsphase und des Rückspülmediums in der Rückspülphase mittels einer vorzugsweise programmierbaren Steuereinheit eingestellt werden oder selbsteinstellend geregelt werden kann. Durch die freie Wählbarkeit des Zeitpunktes und der Einwirkzeit des jeweiligen Reinigungsmediums bzw. Reinigungsverfahrens oder Rückspülverfahrens kann die Regeneration des Filtermittels u.a. an dessen Verschmutzungsgrad angepaßt werden, so daß die Reinigungswirkung des Reinigungs- oder Spülverfahrens erhöht wird.

Die unterschiedlichen Rückspül- und Reinigungsverfahren und/oder unterschiedlichen Reinigungsmedien sind Gegenstand der Verfahrensansprüche 3 bis 15. So kann im Rückspülverfahren mit Filtrat, mithin mit Eigenmedium, rückgespült werden. Für bestimmte Verunreinigungen in der Flüssigkeit kann als Reinigungsmedium ein Ultraschall-erzeuger eingesetzt werden, mit dem eine Ultralschalleinwirkung auf das Filterelement bewirkt wird, wobei vorzugsweise der Ultraschallerzeuger im Zentrum des Filtermittels angeordnet wird. Zusätzlich oder alternativ kann als Reinigungs- oder Rückspülmedium Druckluft eingesetzt werden, die vorzugsweise aus einem Druckspeicher der Filtratseite des Filters zugeführt wird. Wiederum zusätzlich oder alternativ kann als Reinigungs- oder Rückspülverfahren die Flüssigkeit im Filter umgewälzt werden. In bevorzugter Ausgestaltung dieser Variante werden zum Umwälzen Kolben-/Zylindereinheiten oder Membraneinheiten mit beispielsweise druckluftbeaufschlagten Membranen verwendet, von denen vorzugsweise eine der Filtratseite und die andere der Schmutzseite des Filters zugeordnet wird. Zweckmäßigerweise kann dann beim Umwälzen mit Kolben-/Zylindereinheiten in Gegenrichtung zur Filtrierrichtung eine hohe Kolbengeschwindigkeit und beim Umwälzen in Filtrierrichtung eine niedrige Kolbengeschwindigkeit eingestellt werden, wobei weiter vorzugsweise eine der Kolbenzylindereinheiten als Entlastungseinheit mit passivem Kolben eingesetzt wird, der dem jeweiligen Druckkolben keinen oder nur geringen Widerstand entgegensetzt. Auch beim Umwälzen mit Membraneinheiten wird vorzugsweise mit höherer Geschwindigkeit in Gegenrichtung zur Filtrierrichtung als umgekehrt umgewälzt.

Wiederum alternativ oder zusätzlich zu den vorgenannten Varianten kann das Filtermittel mit pulsierendem Reinigungs- oder Rückspülmedium oder mit pulsierender Flüssigkeit gereinigt werden, mithin die Strömungscharakteristik des Mediums gezielt beeinflußt werden. In einer Ausgestaltung kann dann die Pulsation des Mediums, vorzugsweise die Pulsation der Flüssigkeit mit einem oder mehreren Pulsventil/en erzeugt werden, wobei vorzugsweise über das oder die Pulsventil/e die Flüssigkeit aus der Schmutzseite im Filter abgeführt wird. Als Pulsventile können insbesondere mit Schnellschalteinheiten versehene Ventile eingesetzt werden, die den z.B. abfließenden Flüssigkeitsstrom mit vergleichsweise hoher Frequenz absperren und freigeben, so daß hierüber die Pulsation in der Flüssigkeit bzw. dem Reinigungs- oder Rückspülmedium erzeugt wird. Eine besonders günstige Ausführungsform eines Pulsventils könnte von einer rotierenden und mit wenigstens einer Bohrung versehenen Welle gebildet werden. Ein derartiges Pulsventil im Einsatz an Rückspülfiltern kann hierbei von eigenständiger erfinderischer Bedeutung in Zusammenhang mit den vorgenannten Verfahren oder losgelöst von den vorgenannten Verfahren sein. Die erfindungswesentlichen Teile des Pulsventils können insbesondere in der Geometrie der Bohrung bzw. Öffnung in der Welle liegen.

Nach einer weiteren zusätzlichen oder alternativen Verfahrensvariante kann im Reinigungs- oder Rückspülverfahren mit Vakuum gereinigt werden oder ein Vakuum wird zur Erhöhung des Differenzdrucks zwischen Filtrat- und Schmutzseite des Filters eingesetzt. Besonders vorteilhaft ist, wenn in einer separaten Kammer mit begrenztem Volumen das Vakuum erzeugt wird und der Filterinhalt nach Öffnen eines sehr schnell schaltbaren Absperrorgans, beispielsweise eines Keilflachschiebers, in die evakuierte Kammer geleert wird. Der mit dem Vakuum erzielte geringe Widerstand beim Entleeren kann sich besonders vorteilhaft zusammen mit der Rückspülung mit Eigenmedium oder bei der Druckgasrückspülung auswirken, da der Rückspülimpuls auf das Filtermittel erhöht wird. Schließlich kann die Lebensdauer des Filters bzw. des Filtermittels dadurch erhöht werden, daß durch feste Einbauten im Filtergehäuse und vorzugsweise tangentiale Zuströmung eine Vorabscheidung, insbesondere eine Zyklonvorabscheidung von Verunreinigungen in der Flüssigkeit bewirkt wird. Ferner kann in der Rückspülphase eine Ruhephase zur Sedimentation von Verunreinigungen eingesetzt werden, wobei die Sedimentation vorzugsweise in einer separaten, absperrbaren Sedimentationskammer durchgeführt wird und/oder der Druck in dem in der Sedimentationskammer oder dem Filter aufgenommenen Medium erhöht wird. Die vorgenannten Maßnahmen tragen insbesondere dazu bei, den Verlust an Flüssigkeit, insbesondere an Filtrat sowie die Zeitdauer für die Rückspülphase zu minimieren.

Das System zur Durchführung des Verfahrens kennzeichnet sich dadurch, daß das Filtermittel mit wenigstens einem vom Rückspülverfahren insbesondere im Reinigungsmedium oder in der Strömungscharakteristik des Rückspülmediums abweichenden Reinigungsverfahren reinigbar bzw. rückspülbar ist. Auch bei dem System wird mithin die Optimierung der Regeneration des Filtermittels, wie z.B. die Regeneration eines Filtereinsatzes oder von Filterkerzen, durch Kombination und Anwendung unterschiedlicher Rückspül- oder Reinigungsverfahren erzielt. Die unterschiedlichen Reinigungskomponenten oder Reinigungsmedien sind Gegenstand der Unteransprüche 17 bis 25. So kann das System insbesondere einen Ultraschallerzeuger bzw. eine Ultraschallsonde umfassen, die vorzugsweise im Zentrum des Filtermittels angeordnet ist. Alternativ oder zusätzlich können der Filtratseite und der Schmutzseite jeweils eine KolbenZylindereinheit oder eine Membraneinheit zum Umwälzen des Filterinhalts zugeordnet sein, mit denen eine Kolbenreinigung bzw. Reinigung durch Umwälzen des Filterinhalts bewirkt werden kann. Weiter alternativ oder zusätzlich kann das System eine Vakuumquelle umfassen, die vorzugsweise der Schmutzseite unmittelbar oder über eine Zwischenkammer zuschaltbar ist, so daß beim Entleeren des Filters oder bei der Druckgasrückspülung der Strömungswiderstand geringer ist. Weiter alternativ oder zusätzlich kann ein Druckluftspeicher oder eine -quelle vorgesehen sein, die vorzugsweise der Filtratseite des Filters zuschaltbar ist. Weiter vorzugsweise oder alternativ kann ein Pulsventil vorgesehen sein oder es sind Schnellschalteinheiten für ein Ventil zur Erzeugung einer Pulsation im Reinigungsmedium, Rückspülmedium oder in der Flüssigkeit vorgesehen. In besonders bevorzugter Ausgestaltung des Pulsventils kann das Pulsventil eine mit einer Bohrung versehene, rotierbare Welle umfassen, wobei diese Ausgestaltung, einschließlich der Geometrie der Bohrung bzw. Öffnung, von eigenständiger, erfinderischer Bedeutung auch unabhängig von dem System nach Anspruch 16 ist. Weiter vorzugsweise oder alternativ kann der Filter mit einem vorzugsweise kreiszylindrischen Tauchrohr zwischen Filtereinlaß und Filterelement als Zyklonvorabscheider versehen sein. Als zusätzliche oder alternative Systemkomponente kann dem Filter eine absperrbare Kammer als Sedimentationskammer und/oder Vakuumkammer zugeordnet sein. Um an dem System das Verfahren durchführen zu können, ist es günstig, wenn das System eine vorzugsweise programmierbare Steuereinheit umfaßt, mit der die Systemkomponenten für die unterschiedlichen Reinigungs- oder Rückspülverfahren in freier Abfolge und/oder frei festlegbarer Dauer ansteuerbar sind.

In insbesondere bevorzugter Ausgestaltung bildet das System eine Versuchsanlage, in der sämtliche Reinigungskomponenten integriert sind und mit der für unterschiedliche Flüssigkeiten oder unterschiedliche Verunreinigungen von Flüssigkeiten die Betriebsbedingungen und die Reinigungs- bzw. Rückspülverfahren optimierbar sind.

Diese und weitere Ausgestaltungen des Verfahrens und des Systems werden aus der nachfolgenden Beschreibung eines in der Zeichnung gezeigten Ausführungsbeispiels für ein System mit sämtlichen Reinigungskomponenten ersichtlich, wobei das Ausführungsbeispiel nicht schutzbeschränkend ist und einzelne Komponenten weggelassen und/oder durch andere Komponenten ersetzt werden könnten. In der Zeichnung zeigen:
- Fig. 1: das System zur Durchführung des Verfahrens als Versuchsanlage; und
- Fig. 2: einen Schnitt durch das Pulsventil.

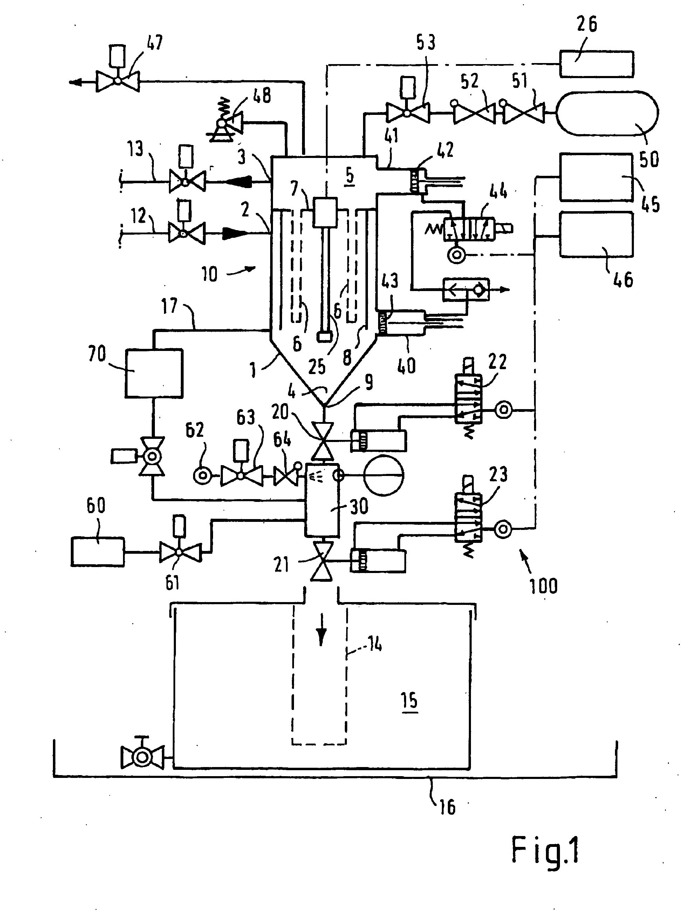

Die Figur 1 zeigt die wesentlichen Komponenten eines insgesamt mit 100 bezeichneten, erfindungsgemäßen Systems zur Durchführung des erfindungsgemäßen Verfahrens. Eine Hauptkomponente des erfindungsgemäßen Systems 100 bildet der insgesamt mit 10 bezeichnete Filter mit einem Filtergehäuse 1, das einen Filtereinlaß 2 und einen Filtratauslaß 3 aufweist, wobei am Filtereinlaß 2 eine Leitung 12 angeschlossen ist, über die zu reinigende Schmutzflüssigkeit mit einstellbarem Druck in eine untere, die Schmutzseite 4 des Filters 1 bildende Kammer hineingepumpt werden kann. Die Schmutzseite 4 ist von der Filtratseite 5 über ein Filtermittel, das hier von mehreren Filterkerzen 6 gebildet wird, die als kerzenförmige Filtersiebe ausgebildet sind und an Bohrungen einer Trennplatte 7 aufgehängt sind, getrennt. Zwischen den das Filtermittel bildenden Filterkerzen 6 und dem Filtereinlaß 2 ist ein Tauchrohr 8 angeordnet, das von der Trennplatte 7 bis über die unteren Enden der Filterkerzen 6 hinausragt und einen Zyklonvorabscheider für schwere Verunreinigungen oder Schwebstoffe in der einströmenden Flüssigkeit bildet. Die Zuströmung am Filtereinlaß 2 erfolgt vorzugsweise tangential ins Filtergehäuse 1.

Im Filtrierbetrieb durchströmt die Flüssigkeit die Filterkerzen 6 von außen nach innen und tritt über den Innenraum der Filterkerzen 6 als Filtrat in die Filtratseite 5 des Filters 1 über; von dort tritt das Filtrat aus dem Filtratauslaß 3 aus und wird über die absperrbare Leitung 13 einem Verbraucher zugeführt. Mit zunehmender Filterleistung der Filterkerzen 6 im Filtrierbetrieb lagern sich ausgefilterte Verunreinigungen an der Außenseite der Filterkerzen 6 ab. Das System 100 weist nun verschiedene Komponenten für ein Reinigungs- oder Rückspülverfahren zur Regenerierung der Filterkerzen 6 auf, um diese Ablagerungen von den Filterwänden zu lösen, aus der Schmutzseite 4 des Filters 1 abzuführen und z.B. einem Nachabscheider wie einem Filterbeutel 14 zuzuführen. Letzterer kann in einem Tank 15 angeordnet sein, in welchem die in der Rückspül- oder Reinigungsphase abgeführte Flüssigkeit gesammelt und für andere Zwecke bereitgestellt werden kann (nicht gezeigt). Unter dem gesamten System 100 ist eine Bodenwanne 16 angeordnet, um etwaige Leckagen im System 100 auffangen zu können.

Im folgenden werden nun die unterschiedlichen Rückspül- bzw. Reinigungsverfahren und zugehörigen Komponenten beschrieben, die im System 100, das eine Versuchsanlage mit sämtlichen Rückspül- bzw. Reinigungsvarianten bildet, verwirklicht sind. Mit dem als Versuchsanlage ausgeführten System 100 kann für bestimmte Schmutzflüssigkeiten oder Verunreinigungsgrade von Schmutzflüssigkeiten eine optimale Regeneration der Filterkerzen 6 erzielt werden. Als Rückspülverfahren ist insbesondere die Rückspülung mit Filtrat vorgesehen, wobei das Filtrat bei abgesperrten Leitungen 12 und ggf. 13 aus der Filtratkammer 5 austritt und die Filterkerzen 6 im Gegenstrom zur Filtrierrichtung durchströmt. Als treibende Kraft für dieses Rückspülverfahren kann der Differenzdruck zwischen Umgebungsdruck im Tank 15 und dem Druck in der Filtratseite 5 eingesetzt werden, wobei z.B. das am Schmutzauslaß 9 des Filtergehäuses 1 angeordnete, schaltbare Absperrorgan 20 und das hinter der Kammer 30 angeordnete schaltbare Absperrorgan 21 bei geschlossener Zuführleitung 12 geöffnet wird, so daß aufgrund des Differenzdruckes das Filtrat durch die Filterwände der Filterkerzen 6 hindurchtritt und dessen Siebwände reinigt. Die Absperrorgane 20, 21 sind mittels pneumatisch gesteuerten Mehrwege-Magnetventile 22, 23 innerhalb kürzester Zeit schaltbar und können insbesondere von Keilflachschiebern gebildet werden.

Als weiteres Reinigungsverfahren ist eine Ultraschallsonde 25 im Zentrum der Filterkerzen 6, mithin des Filtermittels, angeordnet, der mit einem Ultraschallgenerator 26 angesteuert werden kann, um mit Ultraschall auf die Wände der Filterkerzen 6 einzuwirken und die Reinigung bzw. Rückspülung zu unterstützen. Der Ultraschallerzeuger 25 bildet mithin ein anderes Reinigungsmedium als die Rückspülung mit dem Filtrat als Rückspülmedium. Ein weiteres Reinigungs- bzw. Rückspülverfahren wird durch Umwälzen mittels der beiden Kolben-/Zylindereinheiten 40, 41 bewirkt, mit denen bei abgesperrten Leitungen 12, 13 und abgesperrtem Schmutzauslaß 9 die im Innern des Filtergehäuses 1 stehende Flüssigkeit zwischen der Filtratseite 5 und der Schmutzseite 4 umgewälzt werden kann. In der Figur ist die obere Kolben-/Zylindereinheit 41 mit zurückgezogenem Kolben 42 gezeigt, der pneumatisch über das Mehrwege-Magnetventil 44 stoßartig beschleunigt werden kann, um Filtrat im Gegenstrom zur Filtrierrichtung durch die Filterkerzen 6 hindurchströmen zu lassen. Zum Volumenausgleich dient die der Schmutzseite 4 zugeordnete Kolben-/Zylindereinheit 40 mit dem Kolben 43, der einen Entlastungskolben bildet und jedenfalls im Umwälzbetrieb als passiver Kolben 43 auf die Bewegung des Kolbens 42 reagiert. Zum Zurückwälzen der im Filtergehäuse 1 stehenden Flüssigkeit wird der Kolben 43 pneumatisch mit geringer Geschwindigkeit vorgeschoben, um durch die niedrige Kolbengeschwindigkeit ein erneutes Zusetzen der Siebwände der Filterkerzen 6 zu vermeiden. Das Umwälzen kann mehrfach wiederholt und auch vor, zwischen oder während der Durchführung eines anderen Reinigungsverfahrens, z.B. der Ultraschalleinwirkung, durchgeführt werden. Die Magnetventile 22, 23, 44 werden über eine gemeinsame Pneumatikinsel 45 versorgt und der Druck wird über eine Druckregulierung 46 jeweils eingestellt. Vor dem Umwälzen wird der Innenraum 4, 5 des Filters 10 über das Entlüftungsventil 47 vollständig entlüftet, um eine Dämpfung des beim Umwälzen mit dem Kolben 42 aufgebrachten Flüssigkeitsschubs (Reinigungsimpuls) zu vermeiden. Das Sicherheitsventil 48 verhindert Überbeanspruchungen.

Alternativ oder zusätzlich zur mit den Kolben-/Zylindereinheiten 40, 41 bewirkbaren Kolbenreinigung kann eine Druckgasspülung eingesetzt werden, indem aus dem Druckspeicher 50 geeignetes Druckgas durch die Rückschlagventile 51, 52 bei geöffnetem Absperrorgan 53 hindurch der Filtratseite 5 des Filters 10 zugeführt wird und hierdurch entweder das in der Filtratseite 5 enthaltene Filtrat durch die Filterwände im Gegenstrom zur Filtrierrichtung hindurchgedrückt wird oder eine Abreinigung der Außenwände der Filterkerzen 6 ausschließlich mit dem Druckgas aus dem Druckspeicher 50 bewirkt wird. Auch bei dem Reinigungs- bzw. Rückspülverfahren mit Druckgas werden die Leitungen 12, 13 geschlossen und z.B. der Schmutzauslaß 9 und die Absperrorgane 20, 21 geöffnet.

Alternativ oder zusätzlich kann die Reinigung oder Rückspülung bei höherem Differenzdruck durchgeführt werden, indem über die Vakuumquelle 60 bei geöffnetem Absperrventil 61 in der Kammer 30 ein Vakuum erzeugt wird, das anschließend schlagartig bei geöffnetem Absperrorgan 20 am Schmutzauslaß 9 angelegt wird. Zum Leeren der Kammer 30 dient eine über Druckgas- oder Luftquelle 62, so daß bei geöffnetem Absperrventil 63 das Rückschlagventil 64 von dem Gas durchströmt wird und die Kammer 30 geleert wird. Das Entleeren bzw. Evakuieren der Kammer 30 ist insbesondere auch zusammen mit der Druckgasrückspülung oder bei der Rückspülung mit Eigenmedium (Filtrat) vorteilhaft einsetzbar. Da das Volumen der Kammer 30 deutlich geringer als das des Filtergehäuses ist, lassen sich durch Verwendung der Kammer 30 die Verluste an Filtrat und die Zeitdauer für das Rückspülen bzw. Reinigen deutlich minimieren. Für noch ein weiteres Rückspül- oder Reinigungsverfahren mittels des Rückspülmediums ist ein Pulsventil 70 vorgesehen, mit welchem die im Filtergehäuse 1 stehende Flüssigkeit pulsartig beaufschlagt wird. Dies kann z.B. dadurch erfolgen, daß durch Absperren und Öffnen der zum Pulsventil führenden Auslaßleitung 17 Flüssigkeit aus dem Innern des Filters 10 in einer bestimmten, einstellbaren Frequenz abgeführt und in die Kammer 30 überführt wird. Die Wirkung des Pulsventils 70 kann durch Druckluftbeaufschlagung der Schmutzseite 5 noch gesteigert werden. In der Kammer 30 kann anschließend durch Sedimentation und erhöhten Druck eine erste Trennung der schweren Verunreinigungen von der Flüssigkeit stattfinden. Alternativ kann die Sedimentation auch durch Einlegen einer Ruhephase während der Rückspülphase erfolgen, so daß dann in der Schmutzseite 4 des Filters 10 eine Vorabscheidung der schweren Bestandteile durch Sedimentation stattfinden.

Die Kammer 30 kann insbesondere auch eine Auffangkammer während des Entleerens des Filtergehäuses 1 bilden. Nach vorherigem Leeren oder Evakuieren der Kammer 30 wird dann nur eine begrenzte Menge des Filterinhalts im Filtergehäuse 1 bei mit hoher Geschwindigkeit geöffnetem Absperrorgan 20 und geschlossenem Absperrorgan 21 in die Kammer 30 überführt. Auch andere Betriebsweisen mit der Kammer 30 als Auffangkammer und/oder Sedimentationskammer und/oder Vakuumkammer sind möglich.

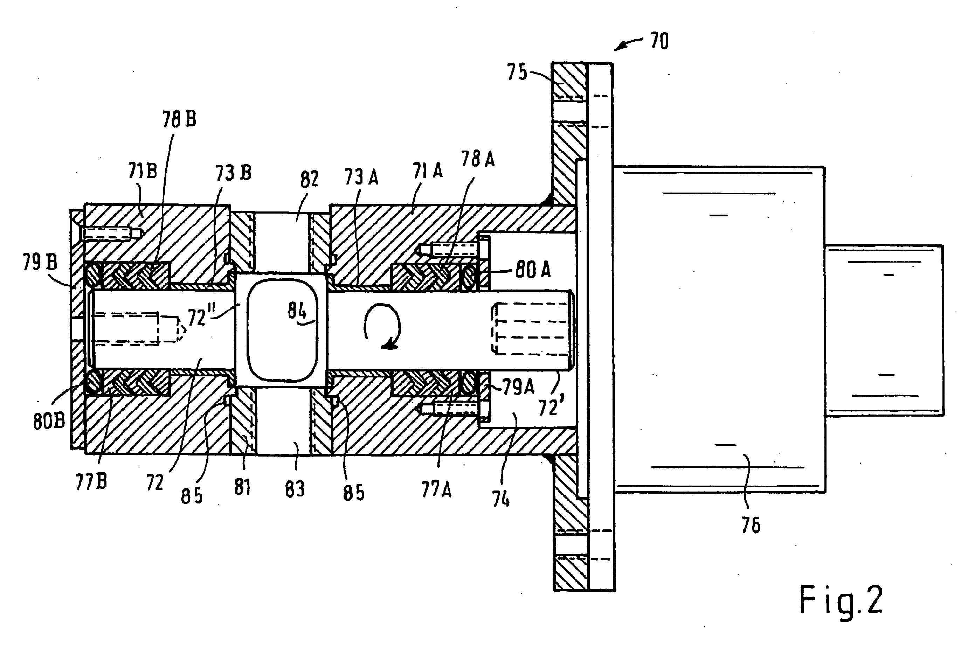

Fig. 2 zeigt eine Schnittansicht durch ein Pulsventil 70 gemäß einer bevorzugten Ausführungsform. Das Pulsventil 70 umfaßt ein zweiteiliges Gehäuse 71A, 71B, in welchem eine Welle 72 mittels Permagleitbuchsen 73A, 73B gelagert ist. Das in Fig. 2 rechte Wellenende 72' liegt in einem Antriebskoppelraum 74 im Innern des rechten Gehäuseteils 71A frei und ist dort drehfest mit der Abtriebswelle eines am Gehäuseflansch 75 angeflanschten Elektromotors 76 verbunden. Jeweils zum Wellenende hin schließt sich an die Permagleitbuchsen 73A, 73B ein Paket 77A, 77B mit mehreren Teflon-Winkelringen 78A, 78B an, die unter Zwischenlage von Dichtringen 80A, 80B und über Kopfplatten 79A, 79B in Position gehalten werden. Zwischen den Gehäuseteilen 71A, 71B sitzt ein Ring 81 mit einem Pulsventileinlaß 82 und einem fluchtend zu diesem angeordneten Pulsventilauslaß 83, in die Anschlußleitungen eingeschraubt werden können. Der Ring 81 ist mittels der O-Ringe 85 abdichtend zwischen den Gehäuseteilen 71A, 71B eingesetzt, wobei diese über nicht gezeigte, versetzt zum Einlaß 82 bzw. Auslaß 83 angeordneten Zylinderschrauben miteinander befestigt sind. Innerhalb des Rings 81 dreht sich der Absatz 72'' der Welle 72, der eine Bohrung 84 mit einer für den Einsatz als Pulsventil besonders geeigneten Geometrie aufweist, wie in der Zeichnung gezeigt. Bei Rotation der Welle 72 wird aufgrund der Geometrie und des Öffnungsquerschnittes der Bohrung 84 die Verbindung zwischen dem Pulsventileinlaß 82 und dem Pulsventilauslaß 83 kurzfristig geschlossen, so daß, wenn das Pulsventil 70 in das System nach Fig. 1 integriert ist, der Abfluß aus dem Filter (10 in Fig. 1) schubweise erfolgt. Der Aufbau des Pulsventils 70, wie in Fig. 2 gezeigt, ist von eigenständiger erfinderischer Bedeutung.

Mit dem erfindungsgemäßen System und dem erfindungsgemäßen Verfahren kann für die Regeneration des Filtermittels mit verschiedenen Rückspül- und Reinigungsverfahren wie insbesondere Druckluft- oder Druckgasrückspülung, Pulsventilreinigung, Umwälzen mit Kolbenreinigung sowie durch Ultraschalleinwirkung gereinigt werden. Unterstützend können sich eine Zyklonabscheidung, zentrifugale Einströmung, Sedimentation und Erhöhen des Differenzdrucks durch Vakuumrückspülung auswirken. Die Dauer, Intensität und/oder Strömungscharakteristika des im jeweiligen Reinigungs- oder Rückspülverfahren eingesetzten Reinigungs- oder Rückspülmediums kann mit einer programmierbaren Steuereinheit (nicht gezeigt) für einen automatischen Betrieb eingestellt werden, so daß in der Versuchsanlage die optimalen Betriebsbedingungen für die Reinigung bzw. Rückspülung der Filterelemente des Filters bestimmt werden können. Im Einsatz können mehrere Systeme mit Filtern parallelgeschaltet werden, so daß zu jeder Zeit wenigstens ein Filter zur Filtration zur Verfügung steht.

## Patentansprüche

1. Verfahren zum Betrieb eines Filters für Flüssigkeiten, insbesondere flüssige Brenn-, Schmier- und Kühlschmierstoffe sowie Waschlaugen und -lösungen, mit einer Filtrierphase, in der die Flüssigkeit durch einen Filtereinlaß in die Schmutzseite des Filtergehäuses eintritt und nach Durchströmen des Filtermittels und Übertritt in die Filtratseite aus einem Filtratauslaß austritt, und mit einer Rückspülphase, in der das Filtermittel in entgegengesetzter Richtung von einem Rückspülmedium durchströmt und gelöste Verunreinigungen aus der Schmutzseite des Filters ausgebracht werden, **dadurch gekennzeichnet, daß** vor, während und/oder nach der Rückspülphase das Filtermittel mit wenigstens einem von dem ersten Rückspülverfahren insbesondere im Reinigungsmedium oder in der Strömungscharakteristik des Rückspülmediums abweichenden Reinigungsverfahren gereinigt wird.

2. Verfahren nach Anspruch 1, **dadurch gekennzeichnet, daß** die Dauer, Intensität und/oder Strömungscharakteristika des Reinigungs- oder Rückspülmediums in der Reinigungsphase und des Rückspülmediums in der Rückspülphase mittels einer vorzugsweise programmierbaren Steuereinheit eingestellt werden oder selbsteinstellend geregelt werden.

3. Verfahren nach Anspruch 1 oder 2, **dadurch gekennzeichnet, daß** im Rückspülverfahren mit Filtrat rückgespült wird.

4. Verfahren nach einem der Ansprüche 1 bis 3, **dadurch gekennzeichnet, daß** als Reinigungsmedium ein Ultraschallerzeuger (25) eingesetzt wird, mit dem eine Ultraschalleinwirkung auf das Filtermittel (6) bewirkt wird, und der vorzugsweise im Zentrum des Filtermittels (6) angeordnet wird.

5. Verfahren nach einem der Ansprüche 1 bis 4, **dadurch gekennzeichnet, daß** als Reinigungs- oder Rückspülmedium Druckgas wie Druckluft eingesetzt wird, die vorzugsweise aus einem Druckspeicher (50) der Filtratseite (5) des Filters (1) zugeführt wird.

6. Verfahren nach einem der Ansprüche 1 bis 5, **dadurch gekennzeichnet, daß** als Reinigungs- oder Rückspülverfahren die Flüssigkeit im Filter (1) umgewälzt wird.

7. Verfahren nach Anspruch 6, **dadurch gekennzeichnet, daß** zum Umwälzen Kolben-/Zylindereinheiten (40,41) oder Membraneinheiten verwendet werden, von denen vorzugsweise eine der Filtratseite (5) und die andere der Schmutzseite (4) des Filters zugeordnet ist.

8. Verfahren nach Anspruch 6 oder 7, **dadurch gekennzeichnet, daß** beim Umwälzen in Gegenrichtung zur Filtrierrichtung hohe Kolbengeschwindigkeiten und beim Umwälzen in Filtrierrichtung niedrige Kolbengeschwindigkeiten eingestellt werden, wobei vorzugsweise jeweils eine der Kolben-/Zylindereinheiten (40) als Entlastungseinheit mit passivem Kolben (43) eingesetzt wird.

9. Verfahren nach einem der Ansprüche 1 bis 8, **dadurch gekennzeichnet, daß** im Reinigungs- oder Rückspülverfahren mit pulsierendem Reinigungs- oder Rückspülmedium oder mit pulsierender Flüssigkeit gereinigt wird.

10. Verfahren nach Anspruch 9, **dadurch gekennzeichnet, daß** die Pulsation des Mediums, vorzugsweise die Pulsation der Flüssigkeit, mit einer oder mehreren Pulsventil/en (70) erzeugt wird, über die vorzugsweise die Flüssigkeit im Filter (1) abgeführt wird.

11. Verfahren nach Anspruch 9 oder 10, **dadurch gekennzeichnet, daß** als Pulsventile mit Schnellschalteinheiten versehene Ventile eingesetzt werden.

12. Verfahren nach einem der Ansprüche 1 bis 11, **dadurch gekennzeichnet, daß** im Reinigungs- oder Rückspülverfahren mit Vakuum gereinigt oder ein Vakuum zur Erhöhung des Differenzdrucks zwischen Filtrat und Schmutzseite des Filters eingesetzt wird, wobei das Vakuum vorzugsweise in einer separaten, absperrbaren und kurzfristig zuschaltbaren Kammer (30) erzeugt wird.

13. Verfahren nach einem der Ansprüche 1 bis 12, **dadurch gekennzeichnet, daß** durch feste Einbauten (8) im Filtergehäuse (1) und vorzugsweise tangentiale Zuströmung eine Vorabscheidung, insbesondere eine Zyklonvorabscheidung von Verunreinigungen in der Flüssigkeit bewirkt wird.

14. Verfahren nach einem der Ansprüche 1 bis 13, **dadurch gekennzeichnet, daß** in der Rückspülphase eine Ruhephase zur Sedimentation von Verunreinigungen eingesetzt wird, wobei die Sedimentation vorzugsweise in einer separaten, absperrbaren Sedimentationskammer (30) oder in der Schmutzseite (4) des Filters (10) durchgeführt wird und/oder der Druck in der Sedimentationskammer (30) während der Ruhephase erhöht wird.

15. System zur Durchführung des Verfahrens nach einem der Ansprüche 1 bis 14, mit einem Filter (10) für Flüssigkeiten, insbesondere flüssige Brenn-, Schmier- und Kühlschmierstoffe sowie Waschlaugen und -lösungen, dessen von Flüssigkeit durchströmbares Filtermittel (6) den Filter (10) in eine den Filtereinlaß (2) umfassende Schmutzseite (4) und den Filtratauslaß (3) umfassende Filtratseite (5) trennt, und der in der Rückspülphase in entgegengesetzter Richtung zur Filtrierrichtung durch ein Rückspülverfahren mit Rückspülmedium rückspülbar ist, **dadurch gekennzeichnet, daß** das Filtermittel (6) mit wenigstens einem vom Rückspülverfahren insbesondere im Reinigungsmedium oder in der Strömungscharakteristik des Rückspülmediums abweichenden Reinigungsverfahren reinigbar bzw. rückspülbar ist.

16. System nach Anspruch 15, **gekennzeichnet durch** einen Ultraschallerzeuger (25), der vorzugsweise im Zentrum des Filtermittels (6) angeordnet ist.

17. System nach Anspruch 15 oder 16, **gekennzeichnet durch** wenigstens eine der Filtratseite (5) und eine der Schmutzseite (4) zugeordnete Kolben-/Zylindereinheit (40;41) zum Umwälzen des Filterinhalts.

18. System nach einem der Ansprüche 15 bis 17, **gekennzeichnet durch** eine Vakuumquelle (60), die vorzugsweise der Schmutzseite (4) unmittelbar oder über eine evakuierbare Zwischenkammer (30) zuschaltbar ist.

19. System nach einem der Ansprüche 15 bis 18, **gekennzeichnet durch** einen Druckluftspeicher (50) oder -quelle, die vorzugsweise der Filtratseite (4) des Filters (10) zuschaltbar ist.

20. System nach einem der Ansprüche 15 bis 19, **gekennzeichnet durch** ein Pulsventil (70) oder Schnellschalteinheiten für ein Ventil zur Erzeugung einer Pulsation im Reinigungsmedium, im Rückspülmedium oder in der Flüssigkeit.

21. System nach einem der Ansprüche 15 bis 20, **gekennzeichnet durch** ein vorzugsweise kreiszylindrisches Tauchrohr (8) zwischen Filtereinlaß (2) und Filtermittel (6) als Zyklonvorabscheider und/oder eine tangentiale Zuströmung am Filtereinlaß (2).

22. System nach einem der Ansprüche 15 bis 21, **dadurch gekennzeichnet, daß** dem Filter (10) eine absperrbare Kammer (30) als Sedimentationskammer und/oder Vakuumkammer und/oder Auffangkammer nachgeschaltet ist.

23. System nach einem der Ansprüche 15 bis 22, **gekennzeichnet durch** eine vorzugsweise programmierbare Steuereinheit, mit der die Systemkomponenten für die unterschiedlichen Reinigungs- oder Rückspülverfahren in freier Abfolge und/oder Dauer ansteuerbar sind.

24. System nach einem der Ansprüche 15 bis 23 **dadurch gekennzeichnet, daß** das System eine Versuchsanlage bildet, in die sämtliche Reinigungs- oder Rückspülkomponenten nach Anspruch 16, 17, 18, 19, 20 und 23 integriert sind, und mit der für unterschiedliche Flüssigkeiten oder Verunreinigungen von Flüssigkeiten die Betriebsbedingungen im Reinigungs- und/oder Rückspülverfahren optimierbar sind.
